# FASCICULE DE BREVET EUROPEEN

(11) **EP 0 593 331 B1**
(45) Date de publication et mention de la délivrance du brevet: **16.04.1997**
(21) Numéro de dépôt: 93402423.3
(22) Date de dépôt: 01.10.1993
(51) Int. Cl.: C10L 1/14, C10L 1/26, C07F 9/572

(54) **Phosphates d'amines comportant un cycle imide terminal, leur préparation et leur utilisation comme additifs pour carburants moteurs**
Aminephosphate mit einem Imid Endring, deren Herstellung, und deren Verwendung als Zusätze für Motorkraftstoffe
Amines phosphates having a terminal imide cycle, their preparation and their use as additives for motor-fuels

(30) Priorité: 09.10.1992 FR 9212277; 18.12.1992 FR 9215441
(43) Date de publication de la demande: 20.04.1994
(73) Titulaire: INSTITUT FRANCAIS DU PETROLE, 92502 Rueil-Malmaison (FR); ELF ANTAR FRANCE, 92078 Paris La Defense (FR)
(72) Inventeur: Denis, Jacques, F-69260 Charbonnieres les Bains (FR); Garapon, Jacques, F-69003 Lyon (FR); Vassilakis, Despina, F-69007 Lyon (FR); Forestiere, Alain, F-69390 Vernaison (FR); Leleu, Gérard, F-69003 Lyon (FR); Leger, Robert, F-69440 Taluyers (FR)
(74) Mandataire: Andreeff, François

(56) Documents cités:
- EP-A- 0 071 513
- EP-A- 0 465 042
- WO-A-83/03616
- FR-A- 1 231 950
- FR-A- 2 130 802
- FR-A- 2 307 032
- FR-A- 2 426 730
- FR-A- 2 531 448
- US-A- 3 795 495
- US-A- 4 014 803
- US-A- 4 234 435

## Description

La présente invention concerne des phosphates d'amines comportant au moins un cycle imide terminal, un procédé de préparation de ces composés et leurs utilisations comme additifs permettant, lors du refroidissement des distillats moyens d'hydrocarbures contenant des paraffines (fuel-oils, gazoles), de ralentir la décantation de ces paraffines.

L'hiver, les réservoirs de produits pétroliers non déparaffinés tels que distillats moyens: notamment gazoles et fuels domestiques, risquent la formation de dépôts. Ceux-ci sont dus à la cristallisation et à la sédimentation des paraffines qui deviennent insolubles lorsque la température s'abaisse au-dessous du point de trouble (en France : - 5 °C pour les gazoles et + 2 °C pour les fuels domestiques).

La cristallisation est d'autant plus importante que la température est plus basse; elle consiste en l'accolement des molécules de paraffines le long de leur axe principal, qui se traduit par une croissance sous forme de plaquettes très fines qui peuvent s'agglomérer entre elles.

La sédimentation de ces cristaux de paraffines dépend d'une part de leur taille et de leur morphologie, qui sont fonction de la composition de la coupe et de la vitesse de refroidissement, d'autre part de la fluidité du milieu.

La sédimentation a un effet néfaste soit dans les bacs de stockage, soit dans les réservoirs de véhicules, car l'orifice des tuyauteries d'aspiration est situé dans le fond des réservoirs où le produit se trouve concentré en paraffines solides. Ce produit aspiré au début du pompage risque de colmater rapidement les filtres du circuit d'alimentation qui retiennent les paraffines cristallisées.

La présente invention concerne des composés ioniques susceptibles de se fixer sur les cristaux naissants de paraffines, de les empêcher de croître et de s'agglomérer, et par conséquent de maintenir la suspension homogène lorsque la température continue à s'abaisser. L'invention concerne également des compositions de distillat moyen de pétrole comprenant une proportion majeure de distillat moyen de pétrole et une proportion mineure, suffisante pour limiter la vitesse de sédimentation des paraffines contenues dans ledit distillat moyen, d'au moins un additif choisi dans le groupe des phosphates d'amine comportant un cycle imide terminal définis ci-après.

Les distillats de pétrole concernés par l'invention consistent en des distillats moyens (fuel-oils, gazoles) contenant des paraffines dont l'intervalle de distillation (norme ASTM D 86-67) se situe entre 150 °C et 450 °C. Les gazoles considérés plus particulièrement ont un intervalle de distillation allant d'une température initiale comprise entre 160 °C et 190 °C à une température finale comprise entre 350 °C et 390 °C.

Les phosphates d'amine, comportant un cycle imide terminal, objets de la présente invention, sont les composés obtenus par la réaction, dans des conditions de formation d'un sel d'amine, d'au moins un phosphate répondant à la formule générale (I) ci-après, avec au moins une amine répondant à la formule générale (II) ou (III) ci-après. La présente invention a également pour objet les phosphates de formule générale (I) notamment en tant que produits intermédiaires pour la synthèse des phosphates d'amine selon la présente invention. Ces phosphates répondent à la formule générale (I) : 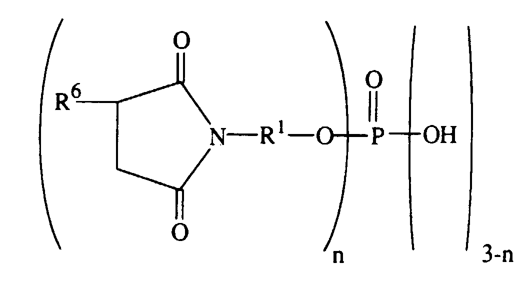 dans laquelle n est égal à 1 ou 2, R¹ est un groupe hydrocarboné divalent ayant de 1 à 32 atomes de carbone, R⁶ représente un atome d'hydrogène ou un groupe hydrocarboné ayant de 1 à 200 atomes de carbone. Le plus souvent R¹ est un groupe aliphatique saturé divalent, linéaire ou ramifié, ce groupe comportant le plus souvent de 1 à 18 atomes de carbone et de préférence de 2 à 18 atomes de carbone, ou un groupe aromatique, comportant éventuellement des substituants comme par exemple des groupes alkyles, et notamment alkyles inférieurs ; ce groupe aromatique comporte le plus souvent de 6 à 24 atomes de carbone et de préférence de 6 à 18 atomes de carbone. Ce groupe R¹ est de préférence un groupe aliphatique saturé divalent et comporte le plus souvent de 2 à 16 atomes et soit est linéaire, soit comporte des ramifications sous forme de groupes alkyles inférieurs tels que des groupes méthyles, éthyles, propyles ou butyles et de préférence des groupes méthyles ou éthyles.

Les amines employées pour former les phosphates d'amine de la présente invention répondent à la formule générale (II) ou à la formule générale (III): 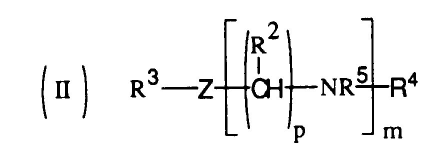 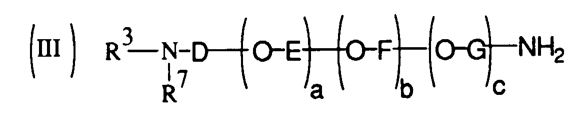 dans lesquelles R³, R⁴ et R⁵, identiques ou différents, représentent chacun un atome d'hydrogène ou un groupe hydrocarboné ayant de 1 à 60 et de préférence de 1 à 48 atomes de carbone, Z est choisi parmi les groupes -O-, et -NR⁷- dans lesquels R⁷ représente un atome d'hydrogène ou groupe hydrocarboné ayant de 1 à 60 et de préférence de 1 à 48 atomes de carbone, R³ et R⁷ pouvant former ensemble avec l'atome d'azote auquel ils sont liés un hétérocycle, chacun des R² indépendamment représente un atome d'hydrogène ou un groupe hydrocarboné ayant de 1 à 4 atomes de carbone ; lorsque Z est -NR⁷-, p est un nombre entier supérieur ou égal à 2, de préférence un nombre de 2 à 10 et m est zéro ou un nombre de 1 à 10 ; lorsque Z est -O-, p est un nombre entier supérieur ou égal à 1, de préférence de 1 à 10 et m est un nombre entier de 1 à 10 ; D, E, F et G, identiques ou différents, représentent chacun un groupe hydrocarboné divalent ayant de 2 à 6 atomes de carbone, a est un nombre entier de 1 à 60, b et c, identiques ou différents, sont chacun zéro ou un nombre entier de 1 à 50 et la somme a + b + c est un nombre entier de 1 à 60.

Parmi les amines utilisées le plus souvent on peut citer celles de formule (II) dans lesquelles m est égal à zéro. Ces monoamines répondent à la formule générale R³R⁴R⁷N et on utilise souvent celles dans lesquelles R⁴ et R⁷ représentent chacun un atome d'hydrogène et R³ un groupe alkyle ayant de 1 à 32 atomes de carbone. A titre d'exemples de ces monoamines primaires on peut citer la méthylamine, l'éthylamine, la propylamine, la butylamine, la pentylamine, l'hexylamine, l'heptylamine, l'octylamine, la nonylamine, la décylamine, la dodécylamine, la tétradécylamine, l'hexadécylamine, l'octadécylamine, l'eicosylamine et docosylamine. On peut également utiliser un mélange de monoamines primaires. On utilise fréquemment des monoamines secondaires de formule R³R⁴NH dans laquelle R³ et R⁴, identiques ou différents, représentent chacun un groupe alkyle ayant de 1 à 32 atomes de carbone ou un mélange de monoamines secondaires tel que par exemple les coupes d'amines grasses de formules R³R⁴NH dont les groupes R³ et R⁴ sont des radicaux hydrocarbonés aliphatiques en C₈, C₁₀, C₁₂, C₁₄, C₁₆, C₁₈, C₂₀ et C₂₂, en proportions molaires approximatives données dans le tableau I ci-après.

On peut également employer des polyamines de formule (II) dans lesquelles R³ est un atome d'hydrogène ou un groupe hydrocarboné ayant de 1 à 32 atomes de carbone, Z est de préférence un groupe -NR⁷ - dans lequel R⁷ représente de préférence un atome d'hydrogène ou un groupe hydrocarboné ayant de 1 à 32 atomes de carbone, chacun des R² indépendamment représente de préférence un atome d'hydrogène ou un groupe méthyle, p est un nombre entier de 2 à 4 et lorsque Z est un groupe -NR⁷-, m est de préférence un nombre entier de 1 à 5.

Parmi les composés de formules (II) ci-avant, on peut employer ceux dans lesquels Z est -NR⁷-, R³, R² et R⁷ représentant chacun un atome d'hydrogène, p est égal à 2 et m est un nombre entier de 1 à 5, ou ceux dans lesquels R³ représente un groupe hydrocarboné ayant de préférence de 5 à 24 atomes de carbone, Z représente un groupe -NR⁷- dans lequel R⁷ est un atome d'hydrogène, R² représente un atome d'hydrogène, p est un nombre entier de 2 à 4, de préférence 3, et m est un nombre entier de 1 à 5, de préférence 1.

Les groupes hydrocarbonés R³ et R⁷ sont habituellement des groupes alkyles, alcényles, linéaires ou ramifiés, aryles, aryl-alkyles (aralkyles), alkyl-aryles (alkaryles) ou cycloaliphatiques. Les groupes R³ et R⁷ sont de préférence des groupes alkyles ou alcényles, linéaires ou ramifiés. Le groupe hydrocarboné R² est habituellement un groupe alkyle de préférence linéaire et par exemple méthyle, éthyle, n-propyle ou n-butyle.

Comme composés spécifiques on peut citer : l'éthylènediamine, la propylènediamine, la triéthylènetétramine, la tripropylènetétramine, la tétraéthylènepentamine, la triméthylènediamine, l'hexaméthylènediamine, les triméthyl-2,2,4 et -2,4,4 hexaméthylènediamine, la di(triméthylène)triamine, les N-alkyl diamino-1,3 propane par exemple le N-dodécyldiamino-1,3 propane, le N-tétradécyldiamino-1,3 propane, le N-hexadécyldiamino-1,3 propane, le N-octadécyldiamino-1,3 propane, le N-eicosyldiamino-1,3 propane et le N-docosyldiamino-1,3 propane ; on peut également citer les N-alkyldipropylène triamines par exemple la N-héxadécyldipropylène triamine, la N-octadécyldipropylène triamine, la N-éicosyldipropylène triamine et la N-docosyldipropylène triamine ; on peut également citer les N-alcényldiamino-1,3 propane et les N-alcényldipropylène triamines par exemple le N-octadécényldiamino-1,3 propane, le N-héxadécényldiamino-1,3 propane, le N-dodécylényldiamino-1,3 propane, le N-octadécadiényldiamino-1,3 propane et le N-docosényldiamino-1,3 propane. On peut citer à titre d'exemples de diamines N,N disubstituées le N,N-diéthyl diamino-1,2 éthane, le N,N-diisopropyl diamino-1,2 éthane, le N,N-dibutyl diamino-1,2 éthane, le N,N-diéthyl diamino-1,4 butane, le N,N-diméthyl diamino-1,3 propane, le N,N-diéthyl diamino-1,3 propane, le N,N-dioctyl diamino-1,3 propane, le N,N-didécyl diamino-1,3 propane, le N,N-didodécyl diamino-1,3 propane, le N,N-ditétradécyl diamino-1,3 propane, le N,N-dihexadécyl diamino-1,3 propane, le N,N-dioctadécyl diamino-1,3 propane, la N,N-didodécyldipropylène triamine, la N,N-ditétradécyldipropylène triamine, la N,N-dihexadécyldipropylène triamine, la N,N-dioctadécyldipropylène triamine, le N-méthyl, N-butyl diamino-1,2 éthane, le N-méthyl N-octyl diamino-1,2 éthane, le N-éthyl,N-octyl diamino-1,2 éthane, le N-méthyl, N-décyl diamino-1,2 éthane, le N-méthyl N-dodécyl diamino 1,3 propane, le N-méthyl, N-hexadécyl diamino-1,3 propane et le N-éthyl N-octadécyl diamino-1,3 propane.

A titre d'exemples d'étheramines on peut citer la méthoxy-2 éthylamine, la méthoxy-3 propylamine, la méthoxy-4 butylamine, l'éthoxy-3 propylamine, l'octyloxy-3 propylamine, la décyloxy-3 propylamine, l'hexadécyloxy-3 propylamine, l'eicosyloxy-3 propylamine, la docosyloxy-3 propylamine, le N-(octyloxy-3 propyl)diamino-1,3 propane, le N-(décyloxy-3 propyl)diamino-1,3 propane, la (triméthyl-2,4,6 décyl)oxy-3 propylamine, le N- [(triméthyl-2,4,6 décyl)oxy-3 propyl ] diamino-1,3 propane, la di-(méthoxy-2 éthyl-) amine, la di-(méthoxy-3 n-propyl-) amine, la di-(méthoxy-2 méthyl-2 éthyl-) amine, la di-(éthoxy-3 n-propyl-) amine, la di-(n-propoxy-3 n-propyl-) amine, la di-(n-butoxy-3 n-propyl-) n-propyl-) amine, la di-(n-pentoxy-3 n-propyl-) amine, la di-(n-hexyloxy-3 n-propyl-) amine, la di-(n-octyloxy-3 n-propyl-) amine, la di-(n-nonyloxy-3 amine, et la di-(n-décyloxy-3 n-propyl-) amine.

Il doit être entendu qu'il est possible de mettre en jeu comme composé aminé un ou plusieurs composés répondant à la formule (II) et/ou (III). Comme exemples spécifiques de mélange de composés répondant à la formule (II) on peut citer :
les coupes de diamines grasses répondant à la formule R³-NH-(-CH₂-)₃-NH₂ dont les groupes R³ sont des radicaux hydrocarbonés aliphatiques en C₈, C₁₀, C₁₂, C₁₄, C₁₆, C₁₈, C₂₀ et C₂₂, en proportions molaires approximatives données dans le tableau I ci-après.

**TABLEAU I**

| chaînes alkyles | C₈ | C₁₀ | C₁₂ | C₁₄ | C₁₆ | C₁₈ | C₁₈₋₁* | C₂₀ | C₂₂ |
|---|---|---|---|---|---|---|---|---|---|
| Coupe | | | | | | | | | |
| A | 0 % | 0 % | 0 % | 1 % | 28 % | 71 % | 0 % | 0 % | 0 % |
| B | 0 % | 0 % | 0 % | 1 % | 5 % | 42 % | 0 % | 12 % | 40 % |
| C | 3 % | 6 % | 56 % | 18 % | 10 % | 2 % | 5 % | 0 % | 0 % |
| D | 0 % | 0 % | 0 % | 0 % | 16 % | 4,9 % | 79,1 % | 0 % | 0 % |
| E | 0 % | 0 % | 0 % | 2,3 % | 31,8 % | 24,2 % | 39 % | 2,7 % | 0 % |

| | | | | | | | | | |
|---|---|---|---|---|---|---|---|---|---|
| *C₁₈₋₁ chaîne comportant une insaturation éthylénique. | | | | | | | | | |

Les polyamines de formules (III) employées sont le plus souvent celles dans lesquelles R³ et R⁷ représentent chacun un atome d'hydrogène, D, E, F et G, identiques ou différents, représentent chacun un groupe alkylène ayant de 2 à 4 atomes de carbone par exemple éthylène, triméthylène, méthyléthylène, tétraméthylène, méthyltriméthylène, méthyl-1 triméthylène et méthyl-2 triméthylène, a est un nombre entier de 1 à 60 et b et c sont égaux à zéro ou a est un nombre entier de 1 à 59, c est zéro ou un nombre entier tel que la somme a + c soit de 1 à 59 et b est un nombre entier de 1 à 50, avec dans chaque cas la somme a + b + c égale à un nombre entier de 1 à 60.

Comme composés spécifiques de formule (III) on peut citer ceux répondant aux formules : 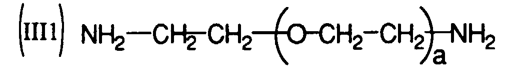 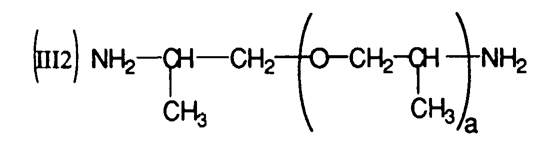 dans lesquelles a est 2, 3, 5, 6 ou environ 33; et 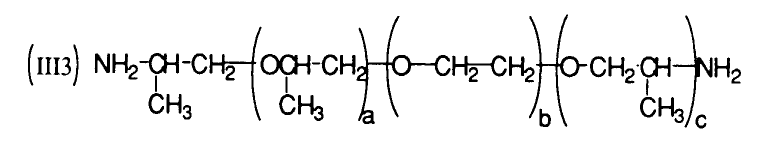 dans laquelle b est environ égal à 8, 9, 15, 16 ou 40 et a + c est environ 2 ou 3.

Ces produits sont en particulier commercialisés par la société TEXACO Chemical sous le nom Jeffamine EDR 148 pour le produit de formule (III1) dans laquelle a = 2, Jeffamine D-230 pour un produit de formule (III2) de masse moléculaire moyenne en nombre de 230, Jeffamine D-400 pour un produit de formule (III2) de masse moléculaire moyenne en nombre de 400, Jeffamine D-2000 pour un produit de formule (III2) de masse moléculaire moyenne en nombre de 2000, Jeffamine ED-600 pour un produit de formule (III3) de masse moléculaire moyenne en nombre de 600, Jeffamine ED-900 pour un produit de formule (III3) de masse moléculaire moyenne en nombre de 900 et Jeffamine ED-2001 pour un produit de formule (III3) de masse moléculaire moyenne en nombre de 2000.

Les phosphates de formules générale (I) sont des composés qui peuvent être préparés par toute méthode bien connue de l'homme du métier. Ces phosphates peuvent en particulier être obtenus par réaction de l'anhydride phosphorique de formule P₂O₅ sur un imide alcool de formule générale (IV) : 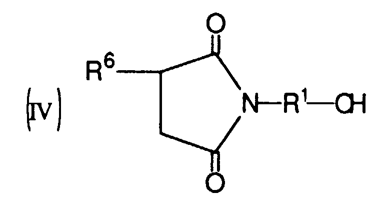 dans laquelle R¹ et R⁶ ont la définition donnée ci-avant. Cet imide alcool de formule générale (IV) peut être obtenu par toute méthode bien connu de l'homme du métier. En particulier, ce composé résulte de la réaction, dans des conditions classiques de formation d'un cycle imide, d'un acide, d'un hemi-ester d'alkyle léger de cet acide (hemi-ester de méthyle, d'éthyle, de propyle ou de butyle) ou de préférence d'un anhydride succinique de formule (V) : 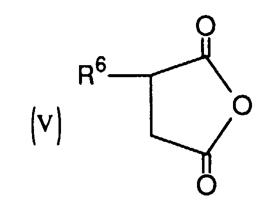 dans laquelle R⁶ a la définition donnée ci-avant, avec un amino-alcool de formule HO-R¹-NH₂ comportant une fonction amine primaire et une fonction alcool de préférence primaire ou secondaire et le plus souvent une fonction alcool primaire. Ce composé succinique a, habituellement, une masse moléculaire moyenne en nombre d'environ 100 à 3000, de préférence 200 à 2000 et le plus souvent 500 à 1500. Ces dérivés succiniques sont largement décrits dans l'art antérieur ; ils sont par exemple obtenus par l'action d'au moins une oléfine alpha ou d'un hydrocarbure chloré sur l'acide ou l'anhydride maléique. L'oléfine alpha ou l'hydrocarbure chloré utilisé dans cette synthèse peuvent être linéaires ou ramifiés, et comportent habituellement de 10 à 150 atomes de carbone, de préférence de 15 à 80 atomes de carbone et le plus souvent de 20 à 75 atomes de carbone dans leur molécule. Cette oléfine peut également être un oligomère, par exemple un dimère, un trimère ou un tétramère, ou un polymère d'une oléfine inférieure, ayant par exemple de 2 à 10 atomes de carbone, telle que l'éthylène, le propylène, le n-butène-I, l'isobutène, le n-hexène-I, le n-octène-I, le méthyl-2-heptène-1 ou le méthyl-2-propyl-5-hexène-1. Il est possible d'utiliser des mélanges d'oléfines ou des mélanges d'hydrocarbures chlorés.

A titre d'exemples d'anhydrides succiniques utilisés on peut citer l'anhydride succinique, méthylsuccinique, éthylsuccinique, propylsuccinique, n-héxylsuccinique, n-octadécénylsuccinique, l'anhydride dodécénylsuccinique, n-tétradécylsuccinique et les anhydrides polyisobuténylsucciniques, souvent dénommés PIBSA, ayant une masse moléculaire moyenne en nombre telle que définie ci-avant.

A titre d'exemple d'amino-alcool utilisés on peut citer la monoéthanolamine, l'amino-1 propanol-3, l'amino-1 propanol-2, l'amino-1 butanol-4, l'amino-1 butanol-2, l'amino-1 pentanol-5, l'amino-1 hexanol-6, l'amino-1 heptanol-7, l'amino-1 octanol-8, l'amino-1 décanol-10, l'amino-1 undécanol-11, l'amino-1 tridécanol-13, l'amino-1 tétradécanol-14, l'amino-1 hexadécanol-16, l'amino-2 méthyl-2 propanol-1, l'amino-2 butanol-1 et l'amino-2 pentanol-1.

Les phosphates d'amine, objets de la présente invention peuvent ainsi être obtenus par un procédé de préparation comportant les étapes suivantes :
a) on met en réaction au moins un amino-alcool de formule HO-R¹-NH₂ avec au moins un dérivé succinique et de préférence un anhydride succinique de formule (V) ci-avant, à une température de 30 °C à 250 °C dans des conditions de formation du cycle imide et d'élimination des produits volatils (eau ou alcool) formés. Le plus souvent la réaction est effectuée à une température de 120 °C à 200 °C avec un rapport molaire d'amino-alcool sur dérivé succinique de 0,9 : 1 à 1,2 : 1 et de préférence d'environ 1 : 1. Cette réaction peut être effectuée en l'absence de tout solvant, mais de préférence on utilisera un solvant ayant un point d'ébullition habituellement compris entre 30 °C et 250 °C et le plus souvent entre 65 °C et 210 °C. Ce solvant est habituellement choisi de manière à pouvoir permettre l'élimination de l'eau ou de l'alcool formé au cours de la réaction de formation du cycle imide. On utilisera en particulier un solvant permettant l'élimination de l'eau sous forme d'un azéotrope eau-solvant. On utilise habituellement un solvant organique tel que par exemple un hydrocarbure aromatique ou naphténo-aromatique. Plus particulièrement, on peut utiliser le benzène, le toluène, les xylènes, l'éthylbenzène ou une coupe d'hydrocarbures telle que par exemple la coupe commerciale SOLVESSO 150 (190-209 °C) contenant 99 % en poids de composés aromatiques. Il est possible d'utiliser des mélanges de solvants, par exemple un mélange de xylènes. Cette étape a) peut dans la pratique être mise en oeuvre de la manière suivante : dans un réacteur contenant le composé dicarboxylique, et en maintenant la température entre 30 °C et 80 °C, on introduit peu à peu l'amino-alcool. On élève ensuite la température à 120 °C-200 °C en éliminant les produits volatils formés (eau ou alcools), soit par entraînement avec un courant de gaz inerte, soit par distillation azéotropique avec le solvant choisi ; la concentration en matière sèche est par exemple de 40 à 70 %, le plus souvent voisine de 50 % à 60 %. La durée de réaction, après addition des réactifs, est comprise par exemple entre 1 et 8 heures et de préférence entre 3 et 6 heures.
b) Soit l'imide-alcool de formule générale (IV) obtenu à l'étape a) dilué dans un liquide (de préférence un solvant) et de préférence dans l'un de ceux utilisables au cours de l'étape a), soit éventuellement après avoir ajusté la concentration en matière sèche, par exemple à environ 50 % en poids, la solution de l'imide-alcool obtenue à l'étape a) est progressivement mis en contact avec une suspension d'anhydride phosphorique dans un liquide qui est de préférence le même que celui dans lequel l'imide-alcool est dilué. Le contact est effectué dans des conditions classiques de formation des phosphates. Cette formation de phosphates de formule générale (I) s'effectue habituellement à une température de 30 °C à 120 °C. La réaction est habituellement complète au bout de 30 minutes à 2 heures. Bien que l'on puisse employer un excès de l'un ou de l'autre de ces composés par rapport à la stoechiométrie, on préfère habituellement être à la proximité de cette stoechiométrie, c'est-à-dire mettre en réaction environ 1 mole d'anhydride phosphorique pour 3 moles d'imide-alcool, ce qui évite d'avoir à éliminer l'excès de l'un ou de l'autre de ces composés. On obtient le plus souvent un mélange de phosphates comprenant principalement un phosphate ayant deux groupe hydroxyles libres et un phosphate ayant un groupe hydroxyle libre.
c) Au liquide contenant le phosphate de formule générale (I), ou le plus souvent un mélange de phosphate de formule générale (I), obtenu à l'étape b) on ajoute lentement au moins une amine de formule générale (II) et/ou (III) de préférence diluée dans un liquide qui est le plus souvent le même que celui employé à l'étape b). Cette addition est effectuée dans des conditions classiques de formation des sels d'amines. Cette formation du ou des phosphate(s) d'amine(s) s'effectue habituellement à une température de 25 °C à 100 °C. La réaction est habituellement complète au bout de 30 minutes à 2 heures. Bien que l'on puisse employer un excès de l'un ou de l'autre de ces composés par rapport à la stoechiométrie, on préfère habituellement être à la proximité de cette stoechiométrie, c'est-à-dire mettre en réaction environ 1 fonction amine par fonction hydroxyle libre du ou des phosphates, ce qui évite d'avoir à éliminer l'excès de l'un ou de l'autre de ces composés.

Les composés de la présente invention sont en particulier utilisables comme additifs pour carburant moteur et plus particulièrement comme additifs antisédimentation pour carburant moteur contenant des paraffines. Parmi ces composés, dans le cadre de leur emploi comme additifs pour ralentir la décantation des paraffines dans les distillats moyens de pétrole (notamment gazoles), on utilise habituellement ceux dans lesquels le groupe R⁶ comprend au moins 6, de préférence au moins 8, et le plus souvent au moins 10 ou même au moins 12 atomes de carbone. Le groupe R⁶ est de préférence un groupe aliphatique, linéaire ou ramifié. Lorsque R⁶ est un groupe aliphatique ramifié, les ramifications sont des groupes alkyles inférieurs (méthyle, éthyle, propyles ou butyles, et le plus souvent méthyle ou éthyle). De préférence, le groupe R⁶ comporte une chaîne carbonée ayant une partie linéaire d'au moins 6 atomes de carbone.

Bien que le mécanisme d'action de ces additifs sur la vitesse de sédimentation des cristaux de paraffines dans les distillats moyens n'ait pas encore été clairement élucidé, on observe un net ralentissement de la décantation des paraffines dans les distillats moyens traités par ces additifs, lorsqu'ils sont ajoutés à des concentrations allant par exemple de 10 à 10 000 grammes par tonne (g/t) de distillat moyen. Les concentrations préférées vont de 50 à 5 000 g/t, et le plus souvent de 100 à 2000 g/t.

La présente invention concerne également les compositions comprenant en poids une proportion majeure d'un carburant moteur contenant des paraffines et une proportion mineure, suffisante pour ralentir la décantation de ces paraffines au cours du refroidissement de ces compositions, d'au moins un composé selon la présente invention, tel que décrit ci-avant ou tel que préparé ci-avant. Ces compositions comprennent le plus souvent au moins un composé selon la présente invention dans les proportions mentionnées ci-avant. A titre d'exemples de carburants pouvant contenir au moins un composé selon la présente invention, on peut citer les gazoles ou carburants Diesel tels que, par exemple, ceux qui sont définis par la norme ASTM D-975. Ces carburants peuvent également contenir d'autres additifs, des additifs antigivres, des additifs anticorrosion et des additifs plus spécifiquement du type détergent. Dans la gamme de concentration de l'additif, de 10 à 10000 g/t, il est possible d'observer une diminution de la proportion de paraffines sédimentées allant jusqu'à 100 % dans les conditions des tests décrits ci-après.

Pour formuler les compositions de distillats moyens de l'invention, il est possible d'ajouter les additifs directement au distillat moyen par une simple opération de mélange.

Il est cependant souvent avantageux de les introduire sous la forme de "solutions mères" préparés au préalable dans les solvants déjà mentionnés ci-avant. Les "solutions mères" peuvent contenir par exemple de 20 à 60 %, et le plus souvent environ 50 % en poids d'additifs.

La présente invention concerne également des formulations d'additifs, pour carburants contenant des paraffines, comprenant au moins un constituant (A) et au moins un constituant (B), ledit constituant (A) consistant en au moins phosphate d'amine et ledit constituant (B) consistant en au moins un produit choisi dans le groupe formé par les additifs de germination des paraffines. Elle concerne également l'utilisation de ces formulations comme composition permettant, lors du refroidissement des distillats moyens d'hydrocarbures contenant des paraffines (par exemple fuel-oils ou gazoles), de ralentir la décantation de ces paraffines, d'abaisser la température de filtrabilité limite et d'améliorer la température limite d'opérabilité.

La sédimentation des cristaux de paraffines dépend d'une part de leur taille et de leur morphologie qui sont fonction de la composition de la coupe et de la vitesse de refroidissement, d'autre part de la fluidité du milieu. Cette fluidité peut par exemple être accrue à l'aide de produits connus de l'homme du métier comme additifs améliorant le point d'écoulement. Cependant l'utilisation d'additifs d'amélioration du point d'écoulement présente l'inconvénient majeur d'accélérer la sédimentation des paraffines.

La présente invention concerne des formulations contenant au moins un additif de germination des paraffines et au moins un composé ionique susceptible de se fixer sur les cristaux naissants de paraffines, de les empêcher de croître et de s'agglomérer, et par conséquent de maintenir la suspension homogène lorsque la température continue à s'abaisser. En d'autres termes ces formulations permettent en particulier de limiter la vitesse de sédimentation des paraffines contenues dans le distillat moyen. Dans la forme préférée de réalisation de la présente invention ces formulations comprendront en outre au moins un additif choisi dans le groupe formé par les produits inhibiteurs de croissance des cristaux de paraffines. Dans cette forme préférée ces formulations présentent l'avantage de permettre d'atteindre une température de filtrabilité limite plus basse qu'avec les additifs connus et également d'avoir une température limite d'opérabilité plus basse.

Par température de filtrabilité limite on désigne au sens de la présente description la température la plus basse à partir de laquelle, sous une pression d'essai choisie, le filtre utilisé est entièrement colmaté et le débit d'hydrocarbures passant à travers ce filtre devient nul. Par température limite d'opérabilité on désigne, au sens de la présente description, la température la plus basse à partir de laquelle il devient impossible de faire fonctionner un moteur à l'aide du carburant, additivé ou non, maintenu dans le circuit d'alimentation à une température fixée.

Dans les formulations d'additifs, pour carburants contenant des paraffines, selon l'invention le constituant (A) consiste en au moins un phosphate d'amine comportant un cycle imide défini comme précédemment.

Le constituant (B) est de préférence choisi dans le groupe formé par les copolymères d'oléfines inférieures, ayant de 2 à 12 et de préférence de 2 à 4 atomes de carbone, et de carboxylates de vinyle de formule

R-COO-CH=CH₂

dans laquelle R représente un groupe hydrocarboné monovalent de préférence aliphatique ayant de 1 à 30 atomes de carbone et de préférence de 1 à 21 atomes de carbone. Parmi ces composés préférés on emploie le plus souvent ceux du groupe formé par les copolymères d'éthylène et d'un carboxylate de vinyle choisi dans le groupe formé par l'acétate de vinyle, le propionate de vinyle et les butyrates de vinyle. A titre d'exemple on peut citer les copolymères éthylène-acétate de vinyle et les copolymères éthylène-propionate de vinyle. Ces copolymères contiennent le plus souvent de 10 à 60 % et de préférence de 15 à 50 % en poids d'ester.

Dans la forme préférée de réalisation de l'invention les formulations comprennent en outre au moins un constituant (C) choisi dans le groupe formé par les produits inhibiteurs de croissance des cristaux de paraffines. On utilise habituellement un constituant (C) choisi dans le groupe formé par les polyacrylates d'alkyles, les polyméthacrylates d'alkyle, dans lesquels le groupe alkyle comporte de 1 à 30 atomes de carbone et de préférence de 4 à 24 atomes de carbone, et les copolymères formés à partir de fumarates de dialkyles, dans lesquels les groupes alkyles ont de 1 à 30 atomes de carbone, et les carboxylates de vinyle de formule

R-COO-CH=CH₂

dans laquelle R représente un groupe hydrocarboné monovalent de préférence aliphatique ayant de 1 à 30 atomes de carbone et de préférence de 1 à 21 atomes de carbone. Parmi ces composés on emploie de préférence les polyacrylates d'alkyles ou les polyméthacrylates d'alkyle, dans lesquels le groupe alkyle comporte au moins 6 atomes de carbone et les copolymères formés à partir de fumarates de dialkyles, dans lesquels les groupes alkyles, identiques ou différents, ont au moins 6 atomes de carbone, et les carboxylates de vinyle choisi dans le groupe formé par l'acétate de vinyle, le propionate de vinyle et les butyrates de vinyle. On utilise souvent des polyméthacrylates et en particulier des polyméthacrylates d'alcools à longue chaîne comportant par exemple au moins 6 atomes de carbone et souvent de 10 à 24 atomes de carbone. A titre d'exemples d'acrylates et de méthacrylates utilisés on peut citer les acrylates de butyle, d'éthylhexyle, de décyle, de dodécyle, d'hexadécyle, d'octadécyle et d'éicosyle. On peut également citer les acrylates et les méthacrylates de coupes industrielles d'alcools renfermant en moyenne 12 atomes de carbone (acrylate et méthacrylate de lauryle) ou 18 atomes de carbone (acrylate ou méthacrylate de stéaryle), ainsi que les coupes d'alcools plus lourds, riches en alcools ayant 20 ou 22 atomes de carbone. A titre d'exemple de telles coupes on peut citer une coupe comprenant en poids 54 % d'alcools en C12, 24 % d'alcools en C14, 10 % d'alcools en C16 et 12 % d'alcools en C18 et une coupe comprenant en poids 8 % d'alcools en C18, 67 % d'alcools en C20 et 25 % d'alcools en C22. On peut citer à titre d'exemple de copolymères de fumarates de diakyle et de carboxylates de vinyle les polymères formés à partir de l'acétate de vinyle et de fumarate dans lesquels les groupes alkyles proviennent d'alcools à longue chaîne ayant par exemple au moins 6 atomes de carbone et par exemple ceux comportant de 10 à 20 atomes de carbone. Les groupes alkyles de ces fumarates peuvent provenir des coupes industrielles d'alcools telles que celles citer ci-devant.

Les formulations selon l'invention sont en particulier utilisables comme additif, ayant une bonne activité antisédimentation, une température de filtrabilité limite diminuée et une température d'opérabilité également abaissée, pour un carburant, contenant des paraffines, à base d'hydrocarbures ou d'un mélange d'hydrocarbures et d'au moins un composé oxygéné choisi dans le groupe formé par les alcools et les éthers. Habituellement ces formulations sont ajoutées au carburant de manière à obtenir une concentration en masse, de la composition d'additif dans le carburant, de 10 à 10 000 ppm, souvent de 100 à 5 000 ppm et de préférence de 100 à 2 000 ppm.

A titre d'exemples de carburants pouvant contenir au moins un composé selon la présente invention, on peut citer les gazoles ou carburants Diesel tels que, par exemple, ceux qui sont définis par la norme ASTM D-975. Ces carburants peuvent également contenir d'autres additifs, des additifs antigivres, des additifs anticorrosion et des additifs plus spécifiquement du type détergent.

Dans les formulations selon la présente invention le rapport pondéral du constituant (A) au constituant (B) [(A)/(B)] est habituellement de 0,05 : 1 à 5 : 1,. Ce rapport est souvent de 0,05 : 1 à 2 : 1 et de préférence de 0,1 : 1 à 2 : 1. Lorsque la formulation comprend également un constituant (C) le rapport pondéral du constituant (B) au constituant (C) [(B)/(C)] est habituellement de 0,1 : 1 à 5 : 1 et de préférence de 0,2 : 1 à 2 : 1. Ce rapport [(B)/(C)] est très souvent relativement proche de 1 : 1.

Les formulations selon la présente invention peuvent être ajoutée directement au carburant par une simple opération de mélange. Il est cependant souvent avantageux de les introduire sous la forme de "solutions mères" préparés au préalable dans les solvants déjà mentionnés ci-avant. Les "solutions mères" peuvent contenir par exemple de 20 à 60 %, et le plus souvent environ 50 % en poids d'additifs.

Les exemples suivants illustrent l'invention et ne doivent en aucune manière être considérés comme limitatifs.

### Exemple 1

a) Première étape
   Dans un ballon tricol de 2 litres, immergé dans un bain d'huile pourvu d'une agitation par barreau magnétique, d'un thermomètre, d'un ampoule d'addition et d'un Dean et Stark, on introduit 266 g d'anhydride n-dodécénylsuccinique (soit 1 mole) et le même poids de xylène. On ajoute lentement par l'ampoule d'addition 61 g d'aminoéthanol (soit 1 mole) dilué par la même quantité de xylène. On chauffe rapidement au reflux du xylène. Le reflux est maintenu pendant 3 heures. On recueille 17,5 g d'eau et 309 g de produit après évaporation du xylène. Ce produit est analysé par spectrométrie infrarouge, et RMN du proton. Le spectre IR contient des bandes importantes à 1400 et 1717 cm⁻¹ caractéristiques du groupement imide et une bande intense à 3450 cm⁻¹ caractéristique du groupe hydroxyle. Le spectre RMN présente les pics attendus avec l'intensité voulue qui correspond au dodécénylsuccinimide de l'aminoéthanol.
b) Deuxième étape
   Dans un ballon tricol de 2 litres, on introduit 47,3 g d'anhydride phosphorique (1/3 mole) en suspension dans le même poids de xylène. L'imide-alcool, obtenu à la première étape, dilué dans le même poids de xylène, est ajouté lentement par l'ampoule d'addition, sous atmosphère d'argon, pour éviter l'hydratation de l'anhydride phosphorique. Lorsque les deux réactifs sont complètement dissous à température ambiante, on chauffe légèrement (à 60° C dans le bain d'huile) pendant 45 minutes. On obtient un produit liquide homogène qui est analysé par infra-rouge et RMN du proton. Le spectre IR montre la disparition de la bande -OH à 3450 cm⁻¹ et l'apparition d'une bande large vers 1010 cm⁻¹ correspondant à la vibration P-O-C. La RMN du proton permet de voir le déplacement chimique des protons des phosphates à 9 ppm.
c) Troisième étape
   Au produit de la deuxième étape, on ajoute lentement par l'ampoule d'addition, 521 g (soit 1 mole) d'une coupe d'amines grasses secondaires de formule R³R⁴N H correspondant à la coupe A du tableau 1, diluée par le même poids de xylène. Par un léger chauffage, à environ 50°C, et sous agitation, durant 30 minutes, on obtient, après évaporation du xylène, un liquide, qui se solidifie à température ambiante, et qui est analysé par spectrométries IR et RMN. Le spectre IR ressemble au spectre du produit de la deuxième étape. Sur le spectre RMN, on observe une augmentation du nombre des protons de CH₂ et de CH₃ dus aux protons des amines.L'analyse des spectres de RMN du phosphore permet de vérifier qu'il ne se forme que des phosphates d'amines avec très peu de polyphosphates. Le produit obtenu dilué à 50 % en poids dans le xylène est appelé additif 1.

### Exemple 2

Les première et deuxième étapes de l'exemple 1 sont recommencées en remplaçant l'anhydride n-dodécénylsuccinique par l'anhydride tétrapropénylsuccinique, dans le même appareil avec les mêmes quantités de réactifs. Le produit issu de la deuxième étape est divisé en 2 parties égales de 178 g. A l'une des parties sont ajoutés 260 g (soit 1/2 mole) de la même coupe d'amines secondaires que dans la troisième étape de l'exemple 1, dilués par le même poids de xylène. Le produit obtenu dilué à 50 % en poids dans le xylène est appelé additif 2.

### Exemple 3

A la deuxième partie du produit de la deuxième étape de l'exemple 2 (178 g), sont ajoutés 300 g (1/2 mole) d'une coupe d'amines grasses secondaires de formule R³R⁴NH correspondant à la coupe B du tableau 1, dilués par le même poids de xylène. Le produit obtenu à 50 % dans le xylène est appelé additif 3.

### Exemples 4 à 7

Les 1 ère et 2 ème étapes de l'exemple 1 sont reprises en remplaçant l'anhydride n-dodécénylsuccinique par un anhydride polyisobutènesuccinique (PIBSA) (le dosage des fonctions anhydride de ce produit montre que l'on a 0,74 fonction anhydride par kilogramme (kg)) dans le même appareil avec des quantités stoechiométriques d'anhydride (1 mole) et d'aminoéthanol (1 mole). Le produit issu de la deuxième étape est divisé en 4 parties égales.
- à la première partie est ajouté 1/4 de mole de dibutylamine diluée par du xylène.
- à la deuxième partie est ajouté 1/4 de mole d'une coupe d'amines grasses secondaires de formule R³R⁴NH correspondant à la coupe C du tableau 1.
- à la troisième partie, est ajouté 1/4 de mole de la coupe d'amines grasses secondaires de formule R³R⁴NH correspondant à la coupe A du tableau 1.
- à la quatrième partie est ajouté 1/4 de mole de la coupe d'amines grasses secondaires de formule R³R⁴NH correspondant à la coupe B du tableau 1
Les produits obtenus, dilués à 50 % en poids dans le xylène sont appelés additifs 4, 5, 6 et 7.

### Exemples 8 à 12

La procédure décrite dans les exemples 4 à 7 est répétée en remplaçant l'anhydride polyisobutènesuccinique à 0,74 fonction anhydride par mole théorique par un anhydride polyisobutènesuccinique à 1,23 fonction anhydride par kg. Le produit issu de la deuxième étape est divisé en 5 parties égales ; 4 parties sont traitées par les mêmes amines que dans les exemples 4 à 7. La cinquième partie est traitée par une amine primaire à chaîne ramifiée en C₁₈ à C₂₂, à la place des amines grasses secondaires. Les produits obtenus, dilués à 50 % en poids dans le xylène sont appelés additifs 8, 9, 10, 11 et 12.

### Exemple 13

La procédure décrite dans l'exemple 1 est répétée en remplaçant l'anhydride n-dodécénylsuccinique par l'anhydride n-octadécénylsuccinique. On obtient un produit, qui, dilué par la même poids de xylène est appelé additif 13.

### Exemple 14

La procédure décrite dans l'exemple 1 est répétée en remplaçant l'aminoéthanol par le 6-aminohexanol-1. On obtient un produit qui, dilué par le même poids de xylène, est appelé additif 14.

### Exemple 15

Les additifs ainsi préparés ont été essayés en laboratoire dans des formulations destinées à améliorer le comportement à froid des gazoles, pour évaluer leur activité d'anti-sédimentation des paraffines.

Les essais de sédimentation ont été effectués dans une armoire dont la température peut être abaissée jusqu'à 30 °C. Tous les essais ont été faits à -15 °C, en éprouvettes de 250 cm³ La durée du maintien à basse température est de 24 heures dans un premier test et de 7 jours dans un deuxième test. A l'issue de chacun de ces tests une cotation visuelle apprécie les volumes de sédiments déposés, de gazole trouble et de gazole clair ou limpide.

La qualité de la phase supérieure est déterminante pour l'efficacité anti-sédimentation de l'additif : lorsque la phase supérieure est trouble, une grande proportion de paraffines est restée en suspension. Lorsque cette phase est claire, la quasi totalité des paraffines a sédimenté.

Si l'on considère à présent la quantité de paraffines sédimentées : plus la phase supérieure est déparaffinée, plus la phase sédimentée est dense, ce qui rend la pompabilité du gazole difficile. On ne peut comparer les quantités de paraffines sédimentées que si elles sont de densité équivalente, c'est-à-dire si les phases supérieures sont de même nature.

Les formules essayées contiennent 100 ppm des additifs 1 à 14 selon l'invention.

Le tableau II présente les caractéristiques des gazoles d'études utilisés.
Le tableau III présente les résultats des essais de sédimentation.

**TABLEAU II**

| GAZOLE N° | Distillation NF M07-002 | | | Masse volumique à 15 °C (Kg/m³) | paraffines % poids | P.T. (°C) | T.L.F. (°C) | P.E. (°C) |
|---|---|---|---|---|---|---|---|---|
| | P.I. (°C) | P.F. (°C) | % distillé 300 °C | | | | | |
| I | 155 | 373 | 72 | 830 | 11 | -6 | -4 | -17 |
| II | 162 | 377 | 70 | 833 | 10 | -5 | -3 | -18 |

**TABLEAU III**

| Additif N° | Gazole I (Volume en cm³) | | | | | | Gazole II (Volume en cm³) | | | | | |
|---|---|---|---|---|---|---|---|---|---|---|---|---|
| | Clair | | Trouble | | Sédiments | | Clair | | Trouble | | Sédiments | |
| | 1 J | 7 J | 1 J | 7 J | 1 J | 7 J | 1 J | 7 J | 1 J | 7 J | 1 J | 7 J |
| 1 | 0 | 0 | 250 | 250 | 0 | 0 | 0 | 0 | 250 | 250 | 0 | 0 |
| 2 | 0 | 0 | 250 | 250 | 0 | 0 | 0 | 0 | 220 | 210 | 30 | 40 |
| 3 | 0 | 215 | 250 | 35 | 0 | 0 | 0 | 0 | 250 | 250 | 0 | 0 |
| 4 | 0 | 0 | 250 | 250 | 0 | 0 | 5 | 80 | 245 | 170 | 0 | 0 |
| 5 | 0 | 0 | 250 | 250 | 0 | 0 | 6 | 15 | 244 | 235 | 0 | 0 |
| 6 | 0 | 0 | 250 | 250 | 0 | 0 | 0 | 0 | 250 | 250 | 0 | 0 |
| 7 | 0 | 0 | 250 | 250 | 0 | 0 | 0 | 110 | 250 | 140 | 0 | 0 |
| 8 | 0 | 0 | 250 | 250 | 0 | 0 | 0 | 90 | 250 | 160 | 0 | 0 |
| 9 | 10 | 50 | 240 | 200 | 0 | 0 | 0 | 110 | 250 | 140 | 0 | 0 |
| 10 | 0 | 0 | 250 | 250 | 0 | 0 | 0 | 0 | 250 | 250 | 0 | 0 |
| 11 | 5 | 60 | 245 | 190 | 0 | 0 | 0 | 150 | 250 | 100 | 0 | 0 |
| 12 | 0 | 0 | 250 | 250 | 0 | 0 | 0 | 0 | 250 | 250 | 0 | 0 |
| 13 | 0 | 0 | 250 | 250 | 0 | 0 | 0 | 0 | 250 | 250 | 0 | 0 |
| 14 | 0 | 0 | 250 | 250 | 0 | 0 | 0 | 0 | 250 | 250 | 0 | 0 |

### Exemple 16

On prépare des solutions, dans le xylène, de formulations comprenant diverses quantités pondérales des constituants (A), (B) et (C) définis ci-après.
Les constituants (A) utilisés sont
(A1) : l'additif 1 obtenu dans l'exemple 1
(A2) : l'additif 2 obtenu dans l'exemple 2
(A3) :un additif préparé selon la procédure suivante.

Les 1 ère et 2 ème étapes de l'exemple 1 sont reprises en remplaçant l'anhydride n-dodécénylsuccinique par un anhydride polyisobutènesuccinique (PIBSA) (le dosage des fonctions anhydride de ce produit montre que l'on a 0,74 fonction anhydride par kilogramme (kg)) dans le même appareil avec des quantités stoechiométriques d'anhydride (1 mole) et d'aminoéthanol (1 mole). Au produit issu de la deuxième étape on ajoute 1/4 de mole d'une coupe d'amines grasses secondaires de formule R³R⁴N H correspondant à la coupe C du tableau 1.

Le constituant (B) est, soit le copolymère (B1) formé à partir d'éthylène et d'acétate de vinyle contenant 32 % en poids d'acétate de vinyle, de masse moléculaire moyenne en nombre, mesurée par tonométrie, de 4900 et d'indice de polydispersité égal à 2,5, soit le copolymère (B2) formé à partir d'éthylène et propionate de vinyle contenant 30 % en poids de propionate de vinyle, de masse moléculaire moyenne en nombre, mesurée par tonométrie, de 5900 et d'indice de polydispersité égal à 2,3. Le constituant (C) est, soit le copolymère (C1) formé à partir d'acétate de vinyle et de fumarate d'une coupe d'alcool comprenant en poids 30 % d'alcools en C12, 27 % d'alcools en C14, 14% d'alcools en C16, 18% d'alcools en C18 et 11 % d'alcools en C20, soit le composé (C2) consistant en un polyméthacrylate de cette même coupe d'alcools de masse moléculaire moyenne en nombre, mesurée par tonométrie, de 26100 et d'indice de polydispersité égal à 2,7. Le copolymère (C1) a une masse moléculaire moyenne en nombre, mesurée par tonométrie, de 16300 et un indice de polydispersité de 2,6. Ces formulations sont ajoutées au carburant sous forme d'une solution dans le xylène contenant 50 % en poids de matière séche. Les concentration de chacun des composés dans le carburant sont précisées dans chaque cas.

Les formulations ainsi préparées ont été essayées en laboratoire pour évaluer leur activité sur le comportement à froid des gazoles. Des tests ont ainsi été effectués pour évaluer leur activité d'antisédimentation, d'inhibition de la croissane des cristaux et d'opérabilité.

### Exemple 17

Les essais de sédimentation ont été effectués comme décrit dans l'exemple 15.

Les formules essayées contiennent diverses quantités des composés A, B et C. Des tests de comparaison ont également effectués sur les gazoles non additivés et sur des gazoles ne contenant que l'un de ces composés.

Le tableau IV présente les résultats des essais de sédimentation.

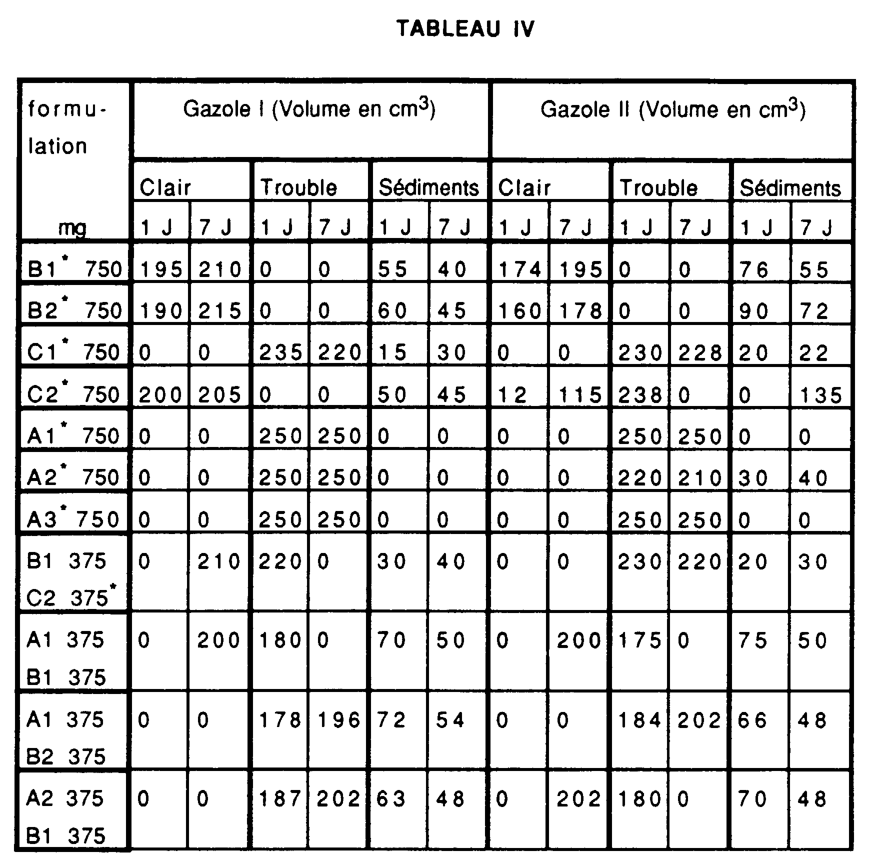

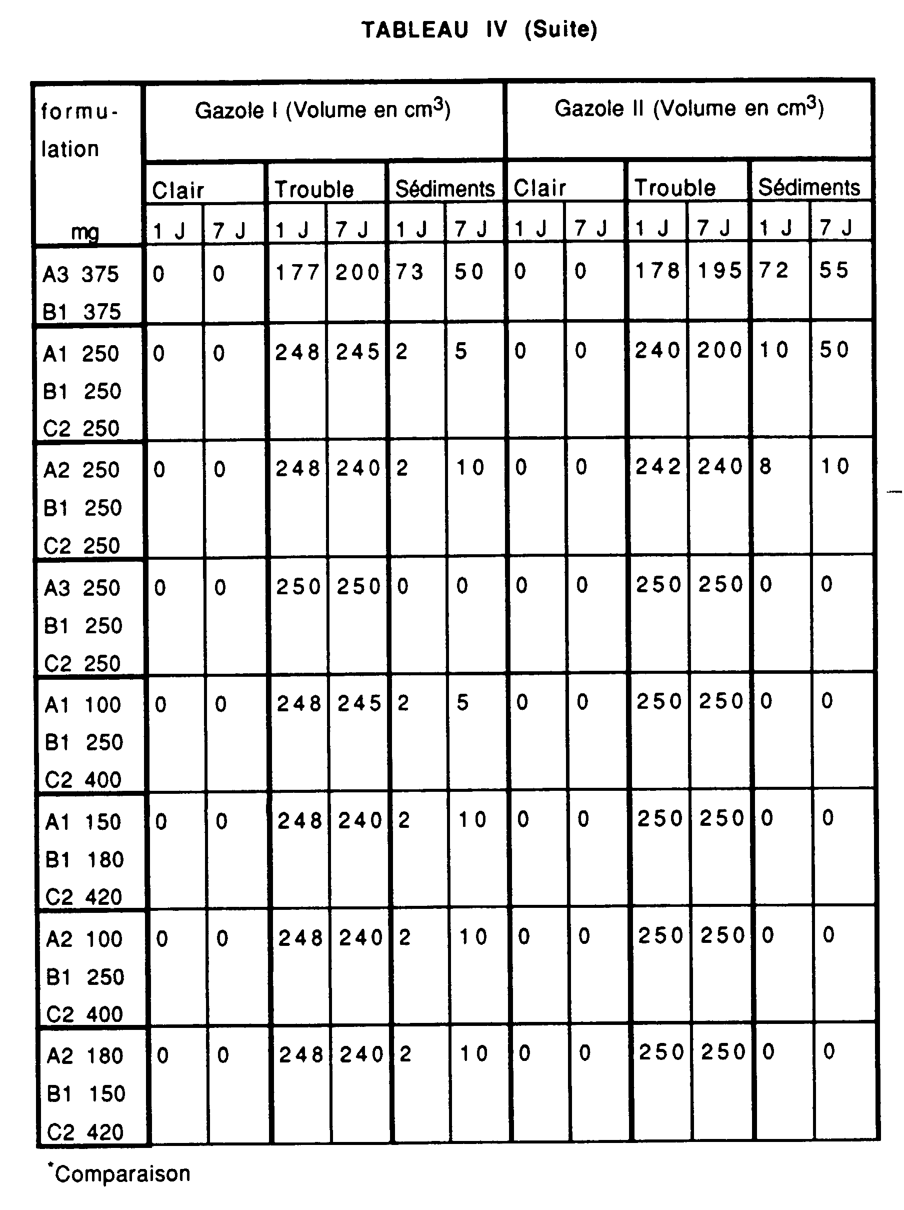

### Exemple 18

On utilise le gazole n° 1 dont les caractéristiques sont données dans le tableau II ci-devant pour évaluer l'action de formulations selon l'invention et de formulations de comparaison sur l'inhibition de croissance des cristaux de paraffine par une méthode de filtration utilisant des filtres de 25 mm. La pression de filtration est fixée à 660 mbar ; l'essai se fait en armoire refroidie de 6°C par heure ; les courbes de débit permettent d'évaluer la tendance au colmatage du filtre par les paraffines.

Les formules essayées sont les mêmes que celles qui ont été utilisées pour les essais de sédimentation, en variant les proportions relatives des constituants.

Le tableau V présente les résultats obtenus en température de filtrabilité limite.

**TABLEAU V**

| Composé A | mg | Composé B | mg | Composé C | mg | T.F.L. °C ** |
|---|---|---|---|---|---|---|
| A1 | 120 | B1 | 350 | C2 | 280 | -16 |
| A1 | 100 | B1 | 250 | C2 | 400 | -16 |
| A2 | 120 | B1 | 350 | C2 | 280 | -20 |
| A | 0 | B | 0 | C | 0 | * -5 |
| A1 | 750 | B | 0 | C | 0 | * -9 |
| A2 | 750 | B | 0 | C | 0 | * -9 |
| A | 0 | B1 | 750 | C | 0 | * -14 |
| A | 0 | B | 0 | C2 | 750 | * -23 |
| A | 0 | B1 | 375 | C2 | 375 | *-13 |
| A2 | 375 | B1 | 375 | C2 | 0 | -13 |
| A2 | 375 | B | 0 | C2 | 375 | * -23 |

| | | | | | | |
|---|---|---|---|---|---|---|
| * Comparaison | | | | | | |
| **T.F.L. Température de Filtrabilité Limite | | | | | | |

### Exemple 19

On utilise le gazole n° 1 dont les caractéristiques sont données dans le tableau II ci-devant pour évaluer l'action de formulations selon l'invention et de formulations de comparaison sur l'opérabilité des carburants ainsi formulés.

L'opérabilité a été évaluée sur un banc de circuit d'alimentation de voiture RENAULT 21 Diesel, en chambre froide refroidie de 2°C par heure et maintenue pendant 5 heures en palier à la température d'essai.

Le tableau VI présente les résultats en température limite d'opérabilité.

**TABLEAU VI**

| Composé A | mg | Composé B | mg | Composé C | mg | T.L.O. °C ** |
|---|---|---|---|---|---|---|
| A2 | 120 | B1 | 350 | C2 | 280 | -10 |
| A2 | 250 | B1 | 250 | C2 | 250 | -12 |
| A3 | 250 | B1 | 250 | C2 | 250 | -11 |
| A | 0 | B | 0 | C | 0 | * -6 |
| A2 | 750 | B | 0 | C | 0 | * -7 |
| A | 0 | B1 | 750 | C | 0 | * -8 |
| A | 0 | B | 0 | C2 | 750 | * -8 |
| A | 0 | B1 | 375 | C2 | 375 | * -7 |
| A2 | 375 | B1 | 375 | C2 | 0 | -9 |
| A2 | 375 | B | 0 | C2 | 375 | *-8 |

| | | | | | | |
|---|---|---|---|---|---|---|
| * Comparaison | | | | | | |
| ** T.L.O. Température Limite d'Opérabilité | | | | | | |

L'ensemble de ces tests montre que les formulations selon l'invention permettent d'obtenir un excellent compromis entre les divers critères de selection d'un carburant additivé pour son emploi sur un véhicule. Les formulations préférées à trois constituants selon la présente invention permettent ainsi d'avoir une température de filtrabilité limite et une température d'opérabilité relativement basse tout en limitant la sédimentation des paraffines au maximum.

## Revendications

1. Phosphate d'amine comportant un cycle imide terminal caractérisé en ce qu'il résulte de la réaction, dans des conditions de formation d'un sel d'amine, d'au moins un phosphate répondant à la formule générale (I) : 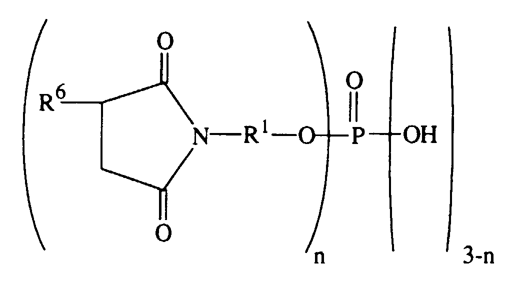 dans laquelle n est égal à 1 ou 2, R¹ est un groupe hydrocarboné divalent ayant de 1 à 32 atomes de carbone, R⁶ représentent un atome d'hydrogène ou un groupe hydrocarboné ayant de 1 à 200 atomes de carbone, avec au moins une amine répondant à l'une des formules générales (II) ou (III): 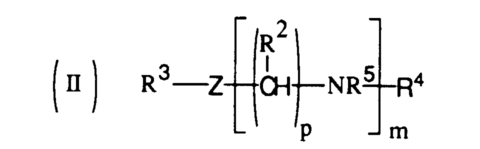 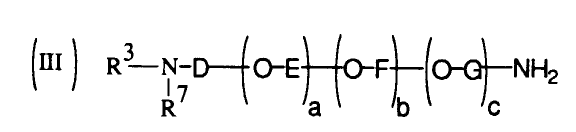 dans lesquelles R³, R⁴ et R⁵, identiques ou différents, représentent chacun un atome d'hydrogène ou un groupe hydrocarboné ayant de 1 à 60 atomes de carbone, Z est choisi parmi les groupes -O-, et -NR⁷- dans lesquels R⁷ représente un atome d'hydrogène ou groupe hydrocarboné ayant de 1 à 60 atomes de carbone, R³ et R⁷ pouvant former ensemble avec l'atome d'azote auquel ils sont liés un hétérocycle, chacun des R² indépendamment représente un atome d'hydrogène ou un groupe hydrocarboné ayant de 1 à 4 atomes de carbone ; lorsque Z est -NR⁷-, p est un nombre entier supérieur ou 1 à 4 atomes de carbone ; lorsque Z est -NR⁷-, p est un nombre entier supérieur ou égal à 2 et m est zéro ou un nombre de 1 à 10 ; lorsque Z est -O-, p est un nombre entier supérieur ou égal à 1 et m est un nombre entier de 1 à 10 ; D, E, F et G, identiques ou différents, représentent chacun un groupe hydrocarboné divalent ayant de 2 à 6 atomes de carbone, a est un nombre entier de 1 à 60, b et c, identiques ou différents, sont chacun zéro ou un nombre entier de 1 à 50 et la somme a + b + c est un nombre entier de 1 à 60.

2. Phosphate, notamment en tant que produit intermédiaire pour la synthèse des phosphates d'amine selon la revendication 1, de formule générale (I) : 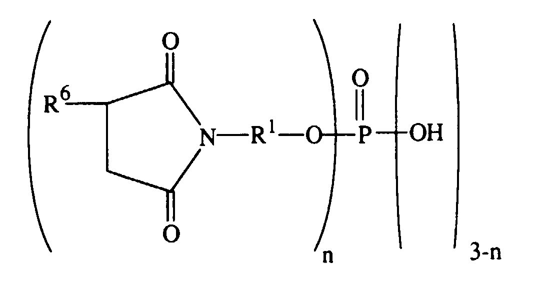 dans laquelle n, R¹, et R⁶ ont les définitions données dans la revendication 1.

3. Procédé de préparation d'un phosphate d'amine selon la revendication 2 ou d'un phosphate d'amine selon la revendication 1 caractérisé en ce qu'il comprend pour la formation d'un phosphate les étapes a) et b) et pour la formation d'un phosphate d'amine les étapes a), b) et c) suivantes :
a) on met en réaction, au moins un amino-alcool de formule HO-R¹-NH₂ avec au moins un dérivé succinique à une température de 30 °C à 250 °C dans des conditions de formation du cycle imide et d'élimination des produits volatils formés,
b) la solution de l'imide-alcool obtenue à l'étape a) ou l'imide-alcool obtenu à l'étape a) dilué dans un liquide est progressivement mis en contact avec une suspension d'anhydride phosphorique dans un liquide, qui est de préférence le même que celui dans lequel l'imide-alcool est dilué,.dans des conditions classiques de formation des phosphates,
c) au liquide contenant au moins un phosphate de formule générale (I), obtenu à l'étape b), on ajoute lentement au moins une amine de formule générale (II) et/ou (III), de préférence diluée dans un liquide qui est le plus souvent le même que celui employé à l'étape b), dans des conditions classiques de formation des sels d'amines.

4. Composition de carburant comprenant en poids une proportion majeure d'un carburant moteur contenant des paraffines et une proportion mineure, suffisante pour ralentir la décantation de ces paraffines au cours du refroidissement de ces compositions, d'au moins un phosphate d'amine selon la revendication 1.

5. Composition selon la revendication 4 comprenant de 10 à 10 000, et de préférence de 50 à 5 000 g/t d'au moins un phosphate d'amine.

6. Formulation d'additifs, pour carburants contenant des paraffines, caractérisée en ce qu'elle comprend au moins un constituant (A) consistant en au moins phosphate d'amine comportant un cycle imide terminal tel que défini dans la revendication 1, et au moins un constituant (B) consistant en au moins un additif de germination des paraffines.

7. Formulation selon la revendication 6 dans laquelle le constituant (B) est choisi dans le groupe formé par les copolymères d'oléfines inférieures, ayant de 2 à 12 et de préférence de 2 à 4 atomes de carbone, et de carboxylates de vinyle de formule
R-COO-CH=CH₂
dans laquelle R représente un groupe hydrocarboné monovalent, de préférence aliphatique, ayant de 1 à 30 atomes de carbone et de préférence de 1 à 21 atomes de carbone.

8. Formulation selon la revendication 6 ou 7 dans laquelle le constituant (B) est choisi dans le groupe formé par les copolymères d'éthylène et d'un carboxylate de vinyle choisi dans le groupe formé par l'acétate de vinyle, le propionate de vinyle et les butyrates de vinyle.

9. Formulation selon l'une des revendications 6 à 8, caractérisee en ce qu'elle contient en outre au moins un constituant (C) choisi dans le groupe formé par les produits Inhibiteurs de croissance des cristaux de paraffines.

10. Formulation selon la revendication 9 dans laquelle le constituant (C) est choisi dans le groupe formé par les polyacrylates d'alkyles, les polyméthacrylates d'alkyle, dans lesquels le groupe alkyle comporte de 1 à 30 atomes de carbone et de préférence de 4 à 24 atomes de carbone, et les copolymères formés à partir de fumarates de dialkyles, dans lesquels les groupes alkyles ont de 1 à 30 atomes de carbone, et les carboxylates de vinyle de formule
R-COO-CH=CH₂
dans laquelle R représente un groupe hydrocarboné monovalent de préférence aliphatique ayant de 1 à 30 atomes de carbone et de préférence de 1 à 21 atomes de carbone.

11. Formulation selon la revendication 9 ou 10 dans laquelle le constituant (C) est choisi dans le groupe formé par les polyacrylates d'alkyles, les polyméthacrylates d'alkyle, dans lesquels le groupe alkyle comporte au moins 6 atomes de carbone et les copolymères formés à partir de fumarates de dialkyles, dans lesquels les groupes alkyles ont au moins 6 atomes de carbone, et les carboxylates de vinyle choisi dans le groupe formé par l'acétate de vinyle, le propionate de vinyle et les butyrates de vinyle.

12. Composition de carburant comprenant en poids une proportion majeure d'un carburant moteur contenant des paraffines et une proportion mineure d'au moins une formulation d'additifs selon l'une des revendications 6 à 11.

13. Composition selon la revendication 12 comprenant de 10 à 10 000 ppm en poids de la formulation d'additifs dans le carburant.

14. Composition selon la revendication 12 ou 13 dans laquelle ladite formulation comprend les constituants (A) et (B) dans un rapport pondéral (A)/(B) de 0,05:1 : 1 à 5 : 1.

15. Composition selon la revendication 14 dans laquelle ladite formulation comprend en outre un constituant (C) en quantité pondérale telle que le rapport pondéral (B)/(C) soit de 0,1 : 1 à 5 : 1.

## Patentansprüche

1. Aminphosphat, das einen endständigen Imidring umfaßt, dadurch gekennzeichnet, daß es unter Bedingungen der Bildung eines Aminsalzes aus der Umsetzung wenigstens eines Phosphates resultiert, das der allgemeinen Formel (I) entspricht: 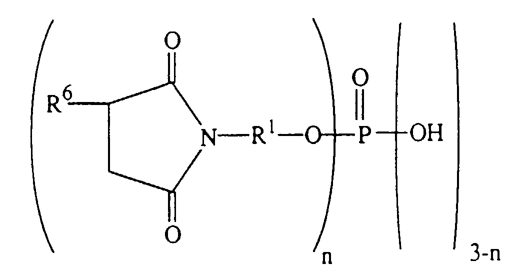 worin n ein Wert von 1 oder 2 ist, R¹ eine divalente Kohlenwasserstoffgruppe mit 1 bis 32 Kohlenstoffatomen ist, R⁶ ein Wasserstoffatom oder eine Kohlenwasserstoffgruppe mit 1 bis 200 Kohlenstoffatomen darstellt, mit wenigstens einem Amin, das einer der allgemeinen Formeln (II) oder (III) entspricht: 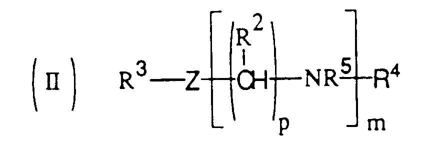 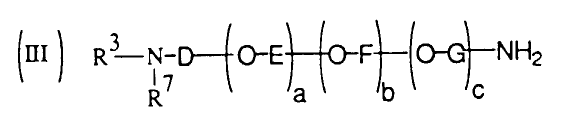 worin die Gruppen R³, R⁴ und R⁵, welche gleich oder verschieden voneinander sind, jede ein Wasserstoffatom oder eine Kohlenwasserstoffgruppe mit 1 bis 60 Kohlenstoffatomen darstellt, Z aus den Gruppen -O- und -NR⁷- ausgewählt ist, worin R⁷ ein Wasserstoffatom oder eine Kohlenwasserstoffgruppe mit 1 bis 60 Kohlenstoffatomen darstellt, R³ und R⁷ zusammen mit dem Stickstoffatom, an das sie gebunden sind, einen Heterozyklus bilden können, jede Gruppe R² unabhängig voneinander ein Wasserstoffatom oder eine Kohlenwasserstoffgruppe mit 1 bis 4 Kohlenstoffatomen darstellt, wenn Z die Gruppe -NR⁷- ist, p eine ganze Zahl von größer oder gleich 2 ist und m 0 oder eine Zahl von 1 bis 10 ist; wenn Z die Gruppe -O- ist, p eine ganze Zahl größer oder gleich 1 ist und m eine ganze Zahl von 1 bis 10 ist; die Gruppen D, E, F, G, welche gleich oder verschieden sind, jede eine zweiwertige Kohlenwasserstoffgruppe mit 2 bis 6 Kohlenstoffatomen darstellt, a eine ganze Zahl von 1 bis 60 ist, b und c, welche gleich oder verschieden sind, jeweils 0 oder eine ganze Zahl von 1 bis 50 sind und die Summe aus a + b + c eine ganze Zahl von 1 bis 60 ist.

2. Phosphat, insbesondere als Zwischenprodukt für die Synthese der Aminphosphate nach Anspruch 1 der allgemeinen Formel (I): 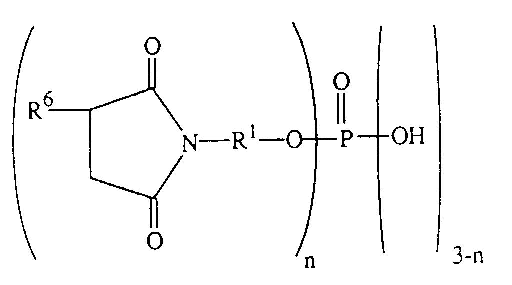 worin n, R¹ und R⁶ die in Anspruch 1 angegebenen Bedeutungen besitzen.

3. Verfahren zur Herstellung eines Aminphosphates nach Anspruch 2 oder eines Aminphosphates nach Anspruch 1, dadurch gekennzeichnet, daß es zur Bildung eines Phosphates die folgenden Stufen a) und b) und für die Bildung eines Aminphosphates die Stufen a), b) und c) umfaßt:
a) man bringt wenigstens einen Aminoalkohol der Formel HO-R¹-NH₂ mit wenigstens einem Succinsäurederivat bei einer Temperatur von 30 bis 250°C unter Bedingungen der Bildung des Imidringes und der Entfernung von gebildeten flüchtigen Produkten zur Reaktion,
b) die Lösung des in Stufe a) erhaltenen Imidalkohols oder der in Stufe a) erhaltene Imidalkohol, der in einer Flüssigkeit verdünnt ist, wird schrittweise mit einer Suspension von Phosphorsäureanhydrid in einer Flüssigkeit, welche vorzugsweise die gleiche wie diejenige ist, in welcher der Imidalkohol verdünnt ist, unter klassischen Bedingungen der Bildung von Phosphaten in Kontakt gebracht,
c) der Flüssigkeit, welche wenigstens ein in Stufe b) erhaltenes Phosphat der allgemeinen Formel (I) enthält, fügt man langsam wenigstens ein Amin der allgemeinen Formel (II) und/oder (III) zu, vorzugsweise in einer Flüssigkeit verdünnt, welche meistens dieselbe ist, wie diejenige, die in Stufe b) eingesetzt ist, unter klassischen Bedingungen der Bildung von Aminsalzen.

4. Kraftstoffzusammensetzung, welche in Gewicht einen Hauptanteil eines Paraffine enthaltenden Motorkraftstoffes und einen Minderanteil wenigstens eines Aminphosphates nach Anspruch 1 umfaßt, der ausreicht, das Absetzen dieser Paraffine während des Abkühlens dieser Zusammensetzungen zu hemmen.

5. Zusammensetzung nach Anspruch 4, welche 10 bis 10.000, vorzugsweise 50 bis 5.000 g/t, wenigstens eines Aminphosphates umfaßt.

6. Additivformulierung für Paraffine enthaltende Kraftstoffe, dadurch gekennzeichnet, daß sie wenigstens einen Bestandteil (A), bestehend aus wenigstens einem Aminphosphat, das einen wie in Anspruch 1 definierten endständigen Imidring umfaßt und wenigstens einen Bestandteil (B), der wenigstens ein Additiv der Keimbildung von Paraffinen umfaßt.

7. Formulierung nach Anspruch 6, worin der Bestandteil (B) aus der Gruppe ausgewählt ist, welche durch die Copolymere von niedrigen Olefinen mit 2 bis 12 und vorzugsweise 2 bis 4 Kohlenstoffatomen und die Vinylcarboxylate der Formel
R-COO-CH=CH₂
gebildet ist, worin R eine monovalente Kohlenwasserstoffgruppe, die vorzugsweise aliphatisch ist, mit 1 bis 30 Kohlenstoffatomen und vorzugsweise mit 1 bis 21 Kohlenstoffatomen darstellt.

8. Formulierung nach Anspruch 6 oder 7, worin der Bestandteil (B) aus der Gruppe ausgewählt ist, welche durch die Ethylencopolymere und einem Vinylcarboxylat, das aus der Gruppe ausgewählt ist, die durch das Vinylacetat, das Vinylpropionat und das Vinylbutyrat gebildet ist, gebildet ist.

9. Formulierung nach einem der Ansprüche 6 bis 8, dadurch gekennzeichnet, daß sie des weiteren wenigstens einen Bestandteil (C) enthält, der aus der Gruppe ausgewählt ist, die durch die das Wachstum von Paraffinkristallen hemmenden Produkte gebildet ist.

10. Formulierung nach Anspruch 9, worin der Bestandteil (C) aus der Gruppe ausgewählt ist, welche durch die Alkylpolyacrylate, die Alkylpolymethacrylate, worin die Alkylgruppe 1 bis 30 Kohlenstoffatome und vorzugsweise 4 bis 24 Kohlenstoffatome umfaßt, und die Copolymere, welche aus Dialkylfumaraten gebildet sind, worin die Alkylgruppen 1 bis 30 Kohlenstoffatome aufweisen, und die Vinylcarboxylate der Formel
R-COO-CH=CH₂
gebildet ist, worin R eine monovalente Kohlenwasserstoffgruppe, welche vorzugsweise aliphatisch ist, mit 1 bis 30 Kohlenstoffatomen und vorzugsweise mit 1 bis 21 Kohlenstoffatomen darstellt.

11. Formulierung nach Anspruch 9 oder 10, worin der Bestandteil (C) aus der Gruppe ausgewählt ist, die durch die Alkylpolyacrylate, die Alkylpolymethacrylate, worin die Alkylgruppe wenigstens 6 Kohlenstoffatome umfaßt und die aus Dialkylfumaraten gebildeten Copolymere, worin die Alkylgruppen wenigstens 6 Kohlenstoffatome aufweisen, und die Vinylcarboxylate gebildet ist, welche aus der Gruppe ausgewählt sind, die durch das Vinylacetat, Vinylpropionat und die Vinylbutyrate gebildet ist.

12. Kraftstoffzusammensetzung, welche in Gewicht einen Hauptanteil eines Paraffine enthaltenden Motorkraftstoffes und einen Minderanteil wenigstens einer Additivformulierung nach einem der Ansprüche 6 bis 11 umfaßt.

13. Zusammensetzung nach Anspruch 12, welche 10 bis 10.000 ppm der Additivformulierung im Kraftstoff umfaßt.

14. Zusammensetzung nach Anspruch 12 oder 13, worin die Formulierung die Bestandteile (A) und (B) in einem Gewichtsverhältnis (A/B) von 0,05:1 bis 5:1 umfaßt.

15. Zusammensetzung nach Anspruch 14, worin die Formulierung außerdem einen Bestandteil (C) in einer Gewichtsmenge umfaßt, daß das Gewichtsverhältnis von (B)/(C) von 0,1:1 bis 5:1 beträgt.

## Claims

1. Amine phosphate inccrporating a terminal imide cycle, characterized in that it results from the reaction, under amine salt formation conditions, of at least one phosphate complying with the general formula (I): 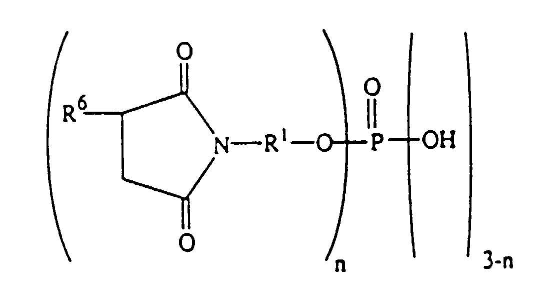 in which n is equal to 1 or 2, R¹ is a divalent hydrocarbon group having 1 to 32 carbon atoms, R⁶ stands for a hydrogen atom or a hydrocarbon group having 1 to 200 carbon atoms, with at least one amine complying with one of the general formulas (II) or (III): 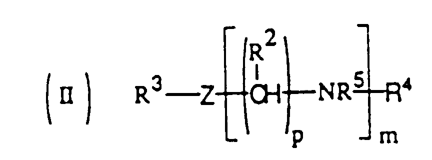 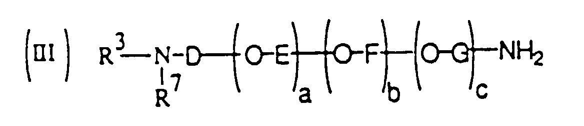 in which R³, R⁴ and R⁵, which can be the same or different, in each case represent a hydrogen atom or a hydrocarbon group having 1 to 60 carbon atoms, Z is chosen from among the groups -O- and -NR⁷-, in which R⁷ stands for a hydrogen atom or a hydrocarbon group having 1 to 60 carbon atoms, in which R³ and R⁷ can form together with the nitrogen atom to which they are linked a heterocycle, each of the R² independently representing a hydrogen atom or a hydrocarbon group having 1 to 4 carbon atoms, when Z is -NR⁷-, p is an integer equal to or higher than 2 and m is zero or an integer from 1 to 10, when Z is -0-, p is an integer equal to or higher than 1 and m is an integer from 1 to 10, D,E,F and G, which are the same or different, in each case represent a divalent hydrocarbon group having 2 to 6 carbon atoms, a is an integer from 1 to 60, b and c, which are the same or different, are in each case zero or an integer from 1 to 50 and the sum a + b + c is an integer from 1 to 60.

2. Phosphate, more particularly as an intermediate for the synthesis of amine phosphates according to claim 1, of general formula (I): 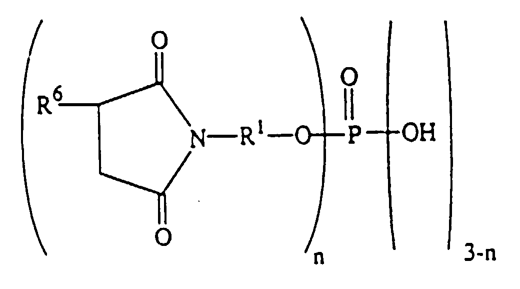 in which n, R¹ and R⁶ have the definitions given in claim 1.

3. Process for the preparation of an amine phosphate according to claim 2, or an amine phosphate according to claim 1, characterized in that it comprises for the formation of a phosphate the stages a) and b) and for the formation of an amine phosphate the stages a), b) and c) given hereinafter:
a) reaction takes place of at least one aminoalcohol of formula HO-R¹-NH₂ with at least one succinic derivative at a temperature of 30°C to 250°C under conditions for the formation of the imide cycle and for the elimination of the volatile products formed,
b) the imide-alcohol solution obtained in stage a) or the imide-alcohol obtained in stage a) diluted in a liquid is progressively contacted with a suspension of phosphoric anhydride in a liquid, which is preferably the same as that in which the imide-alcohol is diluted, under conventional phosphate formation conditions,
c) to the liquid containing at least one phosphate of general formula (I), obtained in stage b), is slowly added at least one amine of general formula (II) and/or (III), preferably diluted in a liquid, which is usually the same as that used in stage b), under conventional amine salt formation conditions.

4. Fuel composition, containing by weight, a major proportion of an engine fuel containing paraffins and a minor proportion, sufficient for slowing down the decanting of these paraffins during the cooling of these compositions, of at least one amine phosphate according to claim 1.

5. Composition according to claim 4 comprising 10 to 10,000 and preferably 50 to 5,000 g/t of at least one amine phosphate.

6. Additive formulation for fuels containing paraffins, characterized in that it comprises at least one constituent (A) consisting of at least amine phosphate containing a terminal imide cycle as defined in claim 1 and at least one constituent (B) consisting of at least one paraffin germination additive.

7. Formulation according to claim 6, wherein the constituent (B) is chosen from within the group formed by copolymers of lower olefins having 2 to 12 and preferably 2 to 4 carbon atoms, and vinyl carboxylates of formula
R-COO-CH=CH₂
in which R represents a monovalent and preferably aliphatic hydrocarbon group having 1 to 30 and preferably 1 to 21 carbon atoms.

8. Formulation according to claim 6 or 7, wherein the constituent (B) is chosen from within the group formed by copolymers of ethylene and vinyl carboxylate chosen from within the group formed by vinyl acetate, vinyl propionate and vinyl butyrates.

9. Formulation according to one of claims 6 to 8, characterized in that it further contains a constituent (C) chosen from within the group formed by the paraffin crystal growth anhibiting product.

10. Formulation according to claim 9, wherein the constituent (C) is chosen from within the group formed by alkyl polyacrylates, alkyl polymethacrylates, in which the alkyl group has 1 to 30 and preferably 4 to 24 carbon atoms, and copolymers formed from dialkyl fumarates, in which the alkyl groups have 1 to 30 carbon atoms, and vinyl carboxylates of formula
R-COO-CH=CH₂
in which R represents a monovalent, preferably aliphatic hydrocarbon group having 1 to 30 and preferably 1 to 21 carbon atoms.

11. Formulation according to claim 9 or 10, wherein the constituent (C) is chosen from within the group formed by alkyl polyacrylates, alkyl polymethacrylates, in which the alkyl group has at least 6 carbon atoms and copolymers formed from dialkyl fumarates, in which the alkyl groups have at least 6 carbon atoms, and vinyl carboxylates chosen from within the group formed by vinyl acetate, vinyl propionate and vinyl butyrates.

12. Fuel composition incorporating, by weight, a major proportion of an engine fuel containing paraffins and a minor proportion of at least one additive formulation according to any one of the claims 6 to 11.

13. Composition according to claim 12 comprising 10 to 10,000 ppm by weight of the additive formulation in the fuel.

14. Composition according to claim 12 or 13, wherein said formulation comprises the constituents (A) and (B) in a weight ratio (A)/(B) of 0.05 : 1 to 5 : 1.

15. Composition according to claim 14, wherein said formulation also comprises a constituent (C) in a weight quantity such that the weight ratio (B)/(C) is 0.1 : 1 to 5 : 1.
